Europäisches Patentamt

European Patent Office

Office européen des brevets

(11) Veröffentlichungsnummer: **0 405 302 A2**

# (12) EUROPÄISCHE PATENTANMELDUNG

(21) Anmeldenummer: 90111571.7

(51) Int. Cl.⁵: **G05B 19/403**

(22) Anmeldetag: **19.06.90**

(30) Priorität: **30.06.89 DE 3921654**

(43) Veröffentlichungstag der Anmeldung:
**02.01.91 Patentblatt 91/01**

(84) Benannte Vertragsstaaten:
**CH DE IT LI NL**

(71) Anmelder: **Siemens Aktiengesellschaft**
**Wittelsbacherplatz 2**
**D-8000 München 2(DE)**

(72) Erfinder: **Hübenthal, Josef, Ing. grad.**
**Lerchenweg 10**
**D-8526 Bubenreuth(DE)**

(54) Verfahren zum Betrieb einer numerisch steuerbaren Maschine.

(57) Um das Programmieren eines Bearbeitungsprogramms (BP) einer numerisch gesteuerten Maschine (WM) zu erleichtern und in einfacher Weise Modifikationen des Programms zu ermöglichen, werden vorgegebene Teile des Bearbeitungsprogramms (BP) zunächst ohne festen Bezug auf die Maschinenachsen (X1,X2) erstellt. Über Eingabedaten (X = X1; Y = Y1), die während der Bebearbeitung eingegeben werden können, werden die programmierten Achsnamen (X,Y) dann an die tatsächlichen Maschinenachsen (X1,Y1) angepaßt.

FIG 1

# VERFAHREN ZUM BETRIEB EINER NUMERISCH STEUERBAREN MASCHINE

Die Erfindung bezieht sich auf ein Verfahren zum Betrieb einer gemäß einem jeweils vorgegebenen Bearbeitungsprogramm mehrachsig numerisch steuerbaren Maschine, insbesondere einer Werkzeugmaschine oder eines Roboters.

Moderne numerisch gesteuerte Maschinen, seien es Werkzeugmaschinen, Bearbeitungszentren oder Roboter, weisen eine Vielzahl von Positionierachsen auf. Diese werden beim Programmieren üblicherweise in Koordinatensysteme strukturiert. Wenn dabei von zweidimensionalen Koordinatensysteme ausgegangen wird, könnten demzufolge jeweils zwei Positionierachsen eine Bewegung in einer Ebene beschreiben. Das resultierende Bewegungsprogramm beinhaltet dann für jedes Koordinatensystem ein eigenes untergeordnetes Bearbeitungsprogramm. Bei einer Vielzahl von Achsen ergibt sich damit ein relativ komplexes Bearbeitungsprogramm für die numerisch zu steuernde Maschine.

Aufgabe der Erfindung ist es, ein Verfahren der eingangs genannten Art so auszubilden, daß sich ein einfach zu erstellendes und leicht modifizierbares Bearbeitungsprogramm ergibt.

Der Erfindung liegt dabei die Erkenntnis zugrunde, daß Bewegungen mehrerer Koordinatensysteme häufig einen identischen Verlauf aufweisen.

Unter Zugrundelegung dieser Erkenntnis wird die Erfindung zum einen dadurch gelöst, daß vorgegebene Teile des Bearbeitungsprogramms zunächst für anonyme Achsen erstellt werden und während des Ablaufs des Bearbeitungsprogrammes über ein Eingabefeld und einen Umsetzer eine Zuordnung von Achsangaben der Maschine zu den anonymen Achsen erfolgt.

Zum anderen wird diese Aufgabe dadurch gelöst, daß vorgegebene Teile des Bearbeitungsprogramms zunächst für anonyme Achsen erstellt werden und während des Ablaufs des Bewegungsprogramms über ein Eingabefeld und einen Umsetzer ein Austausch der anonymen Achsen durch Achsangaben der Maschine erfolgt.

Während im ersteren Fall beispielsweise anonymen Achsen X und Y Indizes 1, 2 usw. hinzugefügt werden, können im zweiten Fall die anonymen Achsen, z.B. X und Y, durch maschinenspezifische Achsen ersetzt werden. So können beispielsweise Achsen W oder Q eingesetzt werden. Hierbei kann aber auch leicht eine Spiegelbewegung dadurch erreicht werden, daß der anonyme Achse X beispielsweise eine Maschinenachse Y1 und der anonymen Achse Y eine Maschinenachse X1 zugeteilt wird.

Ein Ausführungsbeispiel der Erfindung ist in der Zeichnung dargestellt und wird im folgenden näher erläutert. Dabei zeigen:

FIG 1 ein Strukturbild und
FIG 2 und 3 einige Diagramme.

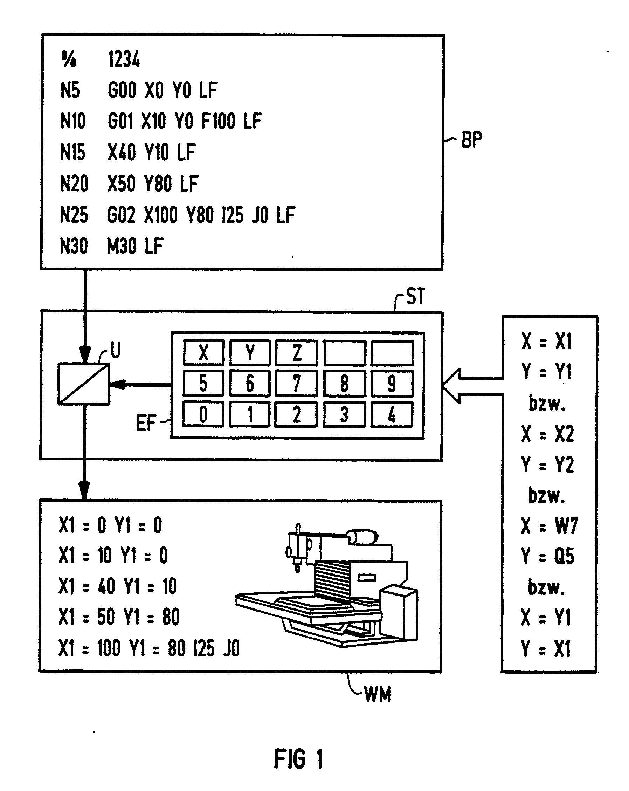

Die Zeichnung gemäß FIG 1 zeigt in Form eines Strukturbildes eine Werkzeugmaschine WM, beispielsweise eine Fräsmaschine, die gemäß einem vorgegebenen Bearbeitungsprogramm BP gesteuert wird, indem dieses einer Steuerung ST zugeleitet wird, die auf die Werkzeugmaschine WM steuernd bzw. regelnd eingreift. Die Steuerung ST weist dabei ein Eingabefeld EF und einen Umsetzer U auf, wobei auf die Funktion dieser Elemente im folgenden noch eingegangen wird. Das Eingabefeld EF ist der Übersichtlichkeit halber nur abschnittsweise dargestellt, wobei in der Darstellung beispielhaft Ziffertasten 0 bis 9 und Buchstabentasten X, Y und Z hervorgehoben sind.

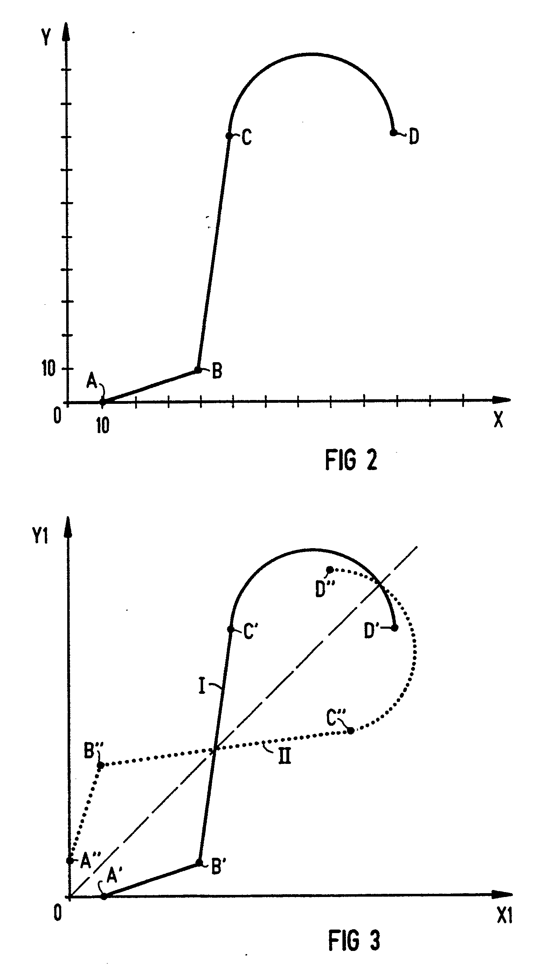

Das Bearbeitungsprogramm BP ist zum anschaulichen Darstellen der erfindungswesentlichen Eigenschaften auf einige knappe Programmschritte beschränkt. Diese Programmschritte werden im folgenden nacheinander erläutert, wobei die dem Programm eigene Geometrie der FIG 2 entnehmbar ist. Diese Geometrie geht von zwei anonymen Achsen X und Y aus. "Anonymen" soll dabei heißen, daß die Achsen X und Y zunächst in keiner Beziehung zu den Achsen der Werkzeugmaschine WM stehen.

Im Bearbeitungsprogramm BP sei durch die Angabe % 1234 eine Benamung des Programms vorangestellt. In einem Programmschritt N5 wird veranlaßt, daß die anonymen Achsen X und Y auf einen Ort mit den Koordinaten O/O verfahren werden. Die Art der Bewegung ist dabei durch einen Befehlsteil GO0 angegeben. Die Angabe LF kennzeichnet jeweils das Ende eines Programmschrittes.

Der Befehl N10 weist durch den Befehlsteil GO1 darauf hin, daß nun eine Linearbahn abzufahren ist, die einen Ort A gemäß FIG 2 ansteuert, dem für die anonymen Achsen X und Y die Koordinatenwerte 10/0 zugeordnet sind. Die Bewegung möge dabei mit einer Geschwindigkeit F100 erfolgen. Die Bezeichnung F100 weist dabei auf eine Geschwindigkeit von 100 mm/min hin.

Der Befehl N15 gibt im weiteren an, daß die Bewegungsbahn im folgenden einen Ort B erreichen möge, dem Koordinatenwerte für X und Y von 40/10 zugeordnet ist.

Die weitere Bewegung soll dann gemäß einem Befehl N20 so fortschreiten, daß ein Punkt C erreicht wird, bei dem die Werte für die anonymen Achsen X und Y die Werte 50/80 erlangen. Dieser Punkt soll der Anfangspunkt einer Kreisbahn sein, wie dies durch einen Befehl N25 durch einen Befehlsteil GO2 verdeutlicht wird. Um den Kreis zu beschreiben beinhaltet der Befehl N25 die Koordinaten des Kreisendpunktes D, dem für die anonymen Achsen X und Y die Werte 100/80 zu eigen sind, sowie eine Information über den Kreismittelpunkt, indem durch die Angabe I 25 und J 0 angegeben wird, daß der Mittelpunkt in X-Richtung 25 Wegeinheiten vom Anfangspunkt des Kreises entfernt ist und in Y-Richtung um 0 Wegeinheiten. Der Befehl N30 ist ein Programmendbefehl, wie dies durch die Bezeichnung M30 angegeben ist.

Das für die anonymen Achsen X und Y erstellte Bearbeitungsprogramm BP gelangt nun an die Steuerung ST und wird "On-line" durch eine manuelle Eingabe so parametrisiert, daß eine Anpassung an die eigentliche Werkzeugmaschine WM erfolgt. Die Art der Variierung der anonymen Achsen kann dabei vielgestaltig sein, wie dies in einem mit einem offenen Pfeil versehenen Feld angedeutet ist. Dabei wird zum einen angenommen, daß beispielsweise der anonymen Achse X eine tatsächliche Achse X1 und der anonymen Achse Y eine tatsächliche Achse Y1 der Werkzeugmaschine WM zugeordnet sein kann. Dieser Fall wird im folgenden in einer Bahnkurve I in FIG 3 dargestellt. Ebenso ist es möglich, daß der anonymen Achse X eine Maschinenachse X2 und der anonymen Achse Y eine Maschinenachse Y2 zugeordnet sein kann oder daß der anonymen Achse X eine Achse W7 und der anonymen Achse Y eine Achse Q5 der tatsächlichen Werkzeugmaschine WM zugeordnet sein kann. Ferner ist es aber auch möglich, daß der anonymen Achse X eine Achse Y1 und der anonymen Achse Y eine Achse X1 der Werkzeugmaschine WM zugeordnet ist. Dieser Fall wird in der Darstellung gemäß FIG 3 mit einer Bahnkurve II gezeigt.

Zunächst sei davon ausgegangen, daß der mit I geschilderte Fall vorliege. Dies führt dazu, daß die im Bearbeitungsprogramm BP vorliegenden anonymen Achsen X und Y manuell über das Bedienfeld BF mit den tatsächlichen Maschinenachsen X1 und Y1 parametrisiert werden. Demzufolge ergibt sich eine Bahnbewegung in einem auf die Maschinenachsen X1 und Y1 bezogenen Koordinatensystem, wie diese in der Darstellung gemäß FIG 3 durch eine durchgezeichnete Linie gezeigt ist. In entsprechender Weise sind für diesen Fall Wegangaben in dem der Werkzeugmaschine WM zugeordneten Feld gemäß FIG 1 vorgenommen. Es zeigt sich, daß ausgehend von einem Koordinatennullpunkt des Koordinatensystems für die tatsächlichen Achsen X1 und Y1 eine Bewegung über die Punkte A′, B′, C′ zu Punkt D′ erfolgt.

Wenn die manuelle Eingabe über das Eingabefeld nun nicht so getroffen wird, daß der anonymen Achse X eine tatsächliche Achse X1, X2 usw. zugeordnet wird und der anonymen Achse Y eine tatsächliche Achse Y1, Y2 usw. zugeordnet wird, sondern wenn eine Inversion der tatsächlichen Achsen gegenüber den anonymen Achsen erfolgt, wie dies im Fall II geschieht, ergibt sich eine Bewegungsbahn II, die gegenüber der Bewegungsbahn im Fall I eine inverse Gestalt aufweist. Diese Bahn ist in der Darstellung gemäß FIG 3 durch eine gepunktete Linie angedeutet. Die signifikanten Bahnpunkte der Bahn für den Fall II sind dabei zur Unterscheidung von den signifikanten Bahnpunkten der Bahn I mit Bezeichnungen A″ bis D″ bezeichnet. Um zu verdeutlichen, daß beide Bahnen zueinander in einem Spiegelverhältnis stehen, ist in der Darstellung gemäß FIG 3 auch noch die Winkelhalbierende des kartesischen Koordinatensystems aus den tatsächlichen Maschinenachsen X1 und Y1 gestrichelt angedeutet.

## Ansprüche

1. Verfahren zum Betrieb einer gemäß einem jeweils vorgegebenen Bearbeitungsprogramm mehrachsig numerisch steuerbaren Maschine, insbesondere einer Werkzeugmaschine oder eines Roboters, **dadurch gekennzeichnet,** daß vorgegebene Teile des Bearbeitungsprogramms (BP) zunächst für anonyme Achsen (X,Y) erstellt werden und während des Ablaufs des Bearbeitungsprogramms über ein Eingabefeld (EF) und einen Umsetzer (U) eine Zuordnung von Achsangaben (X1,Y1,X2,Y2) der Maschine (WM) zu den anonymen Achsen (X,Y) erfolgt.

2. Verfahren zum Betrieb einer gemäß einem jeweils vorgegebenen Bearbeitungsprogramm mehrachsig numerisch steuerbaren Maschinen, insbesondere einer Werkzeugmaschine oder eines Roboters, **dadurch gekennzeichnet,** daß vorgegebene Teile des Bearbeitungsprogramms (BP) zunächst für anonyme Achsen (X,Y) erstellt werden und während des Ablaufs des Bewegungsprogramms (BP) über ein Eingabefeld (EF) und einen Umsetzer (U) ein Austausch der anonymen Achsen (X,Y) durch Achsangaben (W7,Q5,Y1,X1) der Maschine (WM) erfolgt.

```
%     1234
N5    G00 X0 Y0 LF
N10   G01 X10 Y0 F100 LF
N15   X40 Y10 LF
N20   X50 Y80 LF
N25   G02 X100 Y80 I25 J0 LF
N30   M30 LF
```

BP

ST

U

| X | Y | Z |   |   |
| 5 | 6 | 7 | 8 | 9 |
| 0 | 1 | 2 | 3 | 4 |

EF

$X = X1$
$Y = Y1$
bzw.
$X = X2$
$Y = Y2$
bzw.
$X = W7$
$Y = Q5$
bzw.
$X = Y1$
$Y = X1$

$X1 = 0$ $Y1 = 0$
$X1 = 10$ $Y1 = 0$
$X1 = 40$ $Y1 = 10$
$X1 = 50$ $Y1 = 80$
$X1 = 100$ $Y1 = 80$ $I25$ $J0$

WM

FIG 1

FIG 2

FIG 3